# EUROPÄISCHE PATENTANMELDUNG

(11) **EP 3 985 047 A1**
(43) Veröffentlichungstag der Anmeldung: **20.04.2022**
(21) Anmeldenummer: 20201560.8
(22) Anmeldetag: 13.10.2020
(51) Int. Cl.: C08G 64/00, C08G 64/24, C08G 64/30

(54) **VERFAHREN ZUR HERSTELLUNG EINES POLYCARBONATS NACH DEM PHASENGRENZFLÄCHENVERFAHREN UNTER LÖSUNGSMITTELAUSTAUSCH**

(71) Anmelder: Covestro Deutschland AG, 51373 Leverkusen (DE)
(72) Erfinder: HEUER, Helmut Werner, 57074 Siegen (DE); WEHRMANN, Rolf, 47800 Krefeld (DE)
(74) Vertreter: Levpat

(57) **Zusammenfassung**

Gegenstand des Patentes ist ein Verfahren zur Herstellung eines Polycarbonats aus einem Diphenol oder mehreren verschiedenen Diphenolen und einem Carbonylhalogenid nach dem Phasengrenzflächenverfahren. Das erfindungsgemäße Verfahren zeichnet sich dadurch aus, dass die Herstellung des Polycarbonats zuerst in einem organischen Lösungsmittel stattfindet, dass mindestens 80 Gew.-% eines leichtsiedenden organischen Lösungsmittels und höchstens 20 Gew.-% eines höhersiedenden Lösungsmittels enthält, und danach in einem organischen Lösungsmittel aufgearbeitet wird, dass 30 bis 70 Gew.-% eines leichtsiedenden organischen Lösungsmittels und 70 bis 30 Gew.-% eines höhersiedenden organischen Lösungsmittels enthält.

## Beschreibung

Gegenstand der vorliegenden Erfindung ist ein Verfahren zur Herstellung eines Polycarbonats aus einem Diphenol oder mehreren verschiedenen Diphenolen und einem Carbonylhalogenid nach dem Phasengrenzflächenverfahren. Das erfindungsgemäße Verfahren zeichnet sich dadurch aus, dass die Herstellung des Polycarbonats zuerst in einem organischen Lösungsmittel stattfindet, dass mindestens 80 Gew.-% eines leichtsiedenden organischen Lösungsmittels und höchstens 20 Gew.-% eines höhersiedenden Lösungsmittels enthält, und danach in einem organischen Lösungsmittel aufgearbeitet wird, dass 30 bis 70 Gew.-% eines leichtsiedenden organischen Lösungsmittels und 70 bis 30 Gew.-% eines höhersiedenden organischen Lösungsmittels enthält.

Die Polycarbonatherstellung nach dem Phasengrenzflächenverfahren ist bereits von Schnell, "Chemistry and Physics of Polycarbonates", Polymer Reviews, Volume 9, Interscience Publishers, New York, London, Sydney 1964, S. 33-70; D.C. Prevorsek, B.T. Debona und Y. Kesten, Corporate Research Center, Allied Chemical Corporation, Morristown, New Jersey 07960: "Synthesis of Poly(ester Carbonate) Copolymers" in Journal of Polymer Science, Polymer Chemistry Edition, Vol. 18, (1980)"; S. 75-90, D. Freitag, U. Grigo, P.R. Müller, N. Nouvertne', BAYER AG, "Polycarbonates" in Encyclopedia of Polymer Science and Engineering, Volume 1 1, Second Edition, 1988, S. 651-692 und schließlich von Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 beschrieben worden.

Des Weiteren wird auch in EP 0 517 044 A2, EP 0 520 272 A2, oder EP 2 096 131 A1 das Phasengrenzflächenverfahren zur Herstellung von Polycarbonat beschrieben.

Zur Herstellung von Polycarbonat nach dem Phasengrenzflächenverfahren wird ein in wässrig-alkalischer Lösung oder Suspension vorgelegtes Dinatriumsalz eines Diphenols oder ein in wässrig-alkalischer Lösung oder Suspension vorgelegtes Gemisch mehrerer verschiedener Diphenole in Gegenwart eines inerten organischen Lösungsmittels oder Lösungsmittelgemisches mit einem Carbonylhalogenid, insbesondere Phosgen umgesetzt, wobei das inerte organische Lösungsmittel oder Lösungsmittelgemisch neben der wässrigen Phase eine organische Phase ausbildet. Die entstehenden, hauptsächlich in der organischen Phase vorliegenden, Oligocarbonate werden mit Hilfe geeigneter Katalysatoren zu hochmolekularen, in der organischen Phase gelösten, Polycarbonaten aufkondensiert, wobei das Molekulargewicht durch geeignete Kettenabbrecher, beispielsweise monofunktionelle Phenole wie Phenol oder Alkylphenole, insbesondere Phenol, p-tert.Butylphenol, iso-Octylphenol oder Cumylphenol, kontrolliert werden kann. Die organische Phase wird schließlich abgetrennt und das Polycarbonat durch verschiedene Aufarbeitungsschritte daraus isoliert.

Beispielsweise für Bisphenol A kann die Reaktionen wie folgt dargestellt werden:

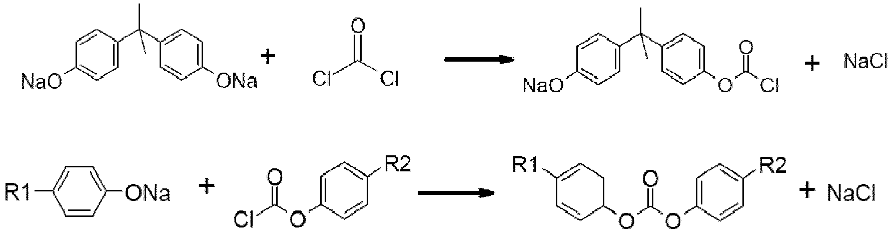

Wobei R1 und R2 unabhängig voneinander wachsende Polycarbonatketten sein können oder Kettenabbrecher oder Teilstrukturen von Kettenabbrechern.

Kontinuierliche Verfahren zur Herstellung von Kondensaten unter Verwendung von Carbonylhalogeniden, insbesondere Phosgen, - beispielsweise die Herstellung von aromatischen Polycarbonaten, oder Polyestercarbonaten oder ihrer Oligomeren, oder spezielle Copolycarbonatenach dem Zweiphasen-Grenzflächenverfahren haben in der Regel den Nachteil, dass zur Beschleunigung der Reaktion und/oder Verbesserung der Phasentrennung mehr Phosgen eingesetzt werden muss, als für die Produktbilanz notwendig ist. Der Phosgen-Überschuss wird dann in der Synthese in Form von Nebenprodukten - beispielsweise zusätzlichem Kochsalz oder Alkalicarbonat-Verbindungen - abgebaut. Typischerweise werden für das kontinuierliche Zweiphasen-Grenzflächenverfahren zur Herstellung von aromatischen Polycarbonaten Phosgenüberschüsse um die 20 Mol-% bezogen auf das zugegebene Diphenolat eingesetzt (vgl. D. Freitag, U. Grigo, P.R. Müller, N. Nouvertne', BAYER AG, "Polycarbonates" in Encyclopedia of Polymer Science and Engineering, Volume 1 1, Second Edition, 1988, S. 651-692).

Polycarbonate im Sinne der vorliegenden Erfindung sind sowohl Homopolycarbonate als auch Copolycarbonate und/oder Polyestercarbonate; die Polycarbonate können in bekannter Weise linear, verzweigt oder hochverzweigt sein. Erfindungsgemäß können auch Mischungen von Polycarbonaten verwendet werden.

Die thermoplastischen Polycarbonate einschließlich der thermoplastischen, aromatischen Polyestercarbonate haben mittlere Molekulargewichte M_{w} (ermittelt durch GPC mittels eines Polycarbonat-Referenzmaterials als Kalibrierung) von 16.000 g/mol bis 40.000 g/mol, vorzugsweise von 18.000 g/mol bis 38.000 g/mol, insbesondere von 19.000 g/mol bis 36.000 g/mol.

Ein Teil, bis zu 80 Mol-%, vorzugsweise von 20 Mol-% bis zu 50 Mol-%, der Carbonat-Gruppen in den erfindungsgemäß eingesetzten Polycarbonaten kann durch aromatische DicarbonsäureesterGruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Die Herstellung der Polycarbonate erfolgt in bekannter Weise aus Diphenolen, gegebenenfalls auch aus Mischungen verschiedener Diphenole, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten.

Für die Herstellung von Polycarbonaten geeignete Dihydroxyarylverbindungen sind solche der Formel (1)

HO-Z-OH (1),

in welcher
- Z: ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.
Bevorzugt steht Z in Formel (2) für einen Rest der Formel (2) 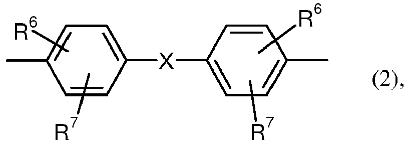 in der
- R⁶ und R⁷: unabhängig voneinander für H, C₁- bis C₁₈-Alkyl-, C₁- bis C₁₈-Alkoxy, Halogen wie Cl oder Br oder für jeweils gegebenenfalls substituiertes Aryl- oder Aralkyl, bevorzugt für H oder C₁- bis C₁₂-Alkyl, besonders bevorzugt für H oder C₁- bis C₈-Alkyl und ganz besonders bevorzugt für H oder Methyl stehen, und
- X: für eine Einfachbindung, -SO₂-, -CO-, -O-, -S-, C₁- bis C₆-Alkylen, C₂- bis Cs-Alkyliden oder C₅- bis C₆-Cycloalkyliden, welches mit C₁- bis C₆-Alkyl, vorzugsweise Methyl oder Ethyl, substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁- bis C₅-Alkylen, C₂- bis C₅-Alkyliden, C₅- bis C₆-Cycloalkyliden, -O-, -SO-, -CO-, -S-, -SO₂-
oder für einen Rest der Formel (2a)

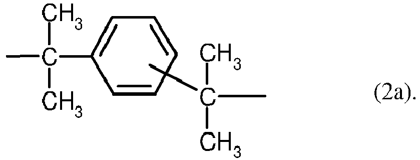

Beispiele für Diphenole (Dihydroxyarylverbindungen) sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole sowie deren kernalkylierte und kernhalogenierte Verbindungen.

Für die Herstellung der erfindungsgemäß zu verwendenden Polycarbonate geeignete Diphenole sind beispielsweise Hydrochinon, Resorcin, Dihydroxydiphenyl, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenylpropan, 1,1-Bis-(4-hydroxyphenyl)-phenylethan, 2,2-Bis-(4-hydroxyphenyl)propan (Bisphenol A (BPA)), 2,4-Bis-(4-hydroxyphenyl)-2-methylbutan, 1,3-Bis-[2-(4-hydroxyphenyl)-2-propyl]-benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol, 1,1-Bis-(4-hydroxyphenyl)-cyclohexan und 1,1-Bis-(4-hydroxyphenyl)-3,3,5-trimethylcyclohexan (Bisphenol TMC (BPTMC)), sowie die Diphenole der Formeln (III) bis (V) oder Mischungen daraus 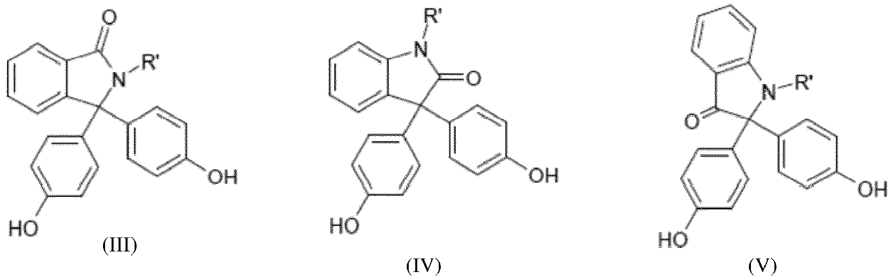 in denen R' jeweils für C₁-C₄-Alkyl, Aralkyl oder Aryl, bevorzugt für Methyl oder Phenyl steht.

Besonders bevorzugte Diphenole sind 4,4'-Dihydroxydiphenyl, 1,1-Bis-(4-Hydroxyphenyl)-phenylethan, 2,2-Bis-(4-hydroxyphenyl)-propan (Bisphenol A (BPA)), 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC (BPTMC)), Resorcin und die Dihydroxyverbindungen der Formeln (III), (IV) und (V), in denen R' jeweils für C₁-C₄-Alkyl, Aralkyl oder Aryl, bevorzugt für Methyl oder Phenyl steht.

Diese und weitere geeignete Diphenole sind z.B. in US 2 999 835 A, US 3 148 172 A, US 2 991 273 A, US 3 271 367 A, US 4 982 014 A und US 2 999 846 A, in den deutschen Offenlegungsschriften DE 1 570 703 A1, DE 2 063 050 A1, DE 2 036 052 A1, DE 2 211 956 A1 und DE 3 832 396 A1, der französischen Patentschrift FR 1 561 518 A1, in der Monographie "H. Schnell, Chemistry and Physics of Polycarbonates, Interscience Publishers, New York 1964, S. 28 ff.; S.102 ff.", und in "D.G. Legrand, J.T. Bendler, Handbook of Polycarbonate Science and Technology, Marcel Dekker New York 2000, S. 72ff." beschrieben.

Ebenso ist es möglich, dass erfindungsgemäß Diphenole der allgemeinen Formel (1a) eingesetzt werden. 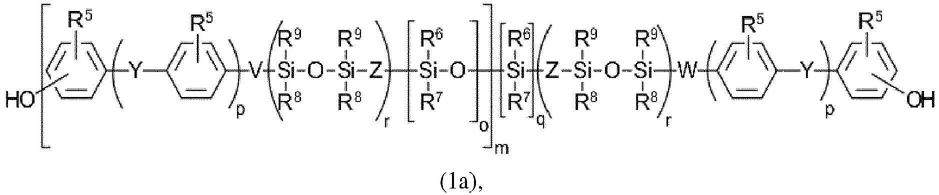 wobei
R⁵ für Wasserstoff oder C₁- bis C₄- Alkyl, C₁- bis C₃-Alkoxy, vorzugsweise für Wasserstoff; Methoxy oder Methyl, steht,
R⁶, R⁷, R⁸ und R⁹ jeweils unabhängig voneinander für C₁- bis C₄-Alkyl oder C₆- bis C₁₂-Aryl, vorzugsweise für Methyl oder Phenyl stehen,
Y für eine Einfachbindung, SO₂-, -S-, -CO-, -O-, C₁- bis C₆-Alkylen, C₂- bis C₅-Alkyliden, C₆- bis C₁₂-Arylen, welches gegebenenfalls mit weiteren Heteroatome enthaltenden aromatischen Ringen kondensiert sein kann oder für einen C₅- bis C₆-Cycloalkylidenrest, der ein- oder mehrfach mit C₁-bis C₄-Alkyl substituiert sein kann, bevorzugt für eine Einfachbindung, -O-, Isopropyliden oder für einen C₅- bis C₆-Cycloalkylidenrest, der ein- oder mehrfach mit C₁- bis C₄-Alkyl substituiert sein kann, steht,
V für Sauerstoff, C₂- bis C₆-Alkylen oder C₃- bis C₆-Alkyliden, bevorzugt für Sauerstoff oder C₃-Alkylen,
p, q und r jeweils unabhängig für 0 oder 1 stehen,
wenn q = 0 ist, W für eine Einfachbindung steht, wenn q = 1 und r = 0 ist, W für Sauerstoff, C₂- bis C₆-Alkylen oder C₃- bis C₆-Alkyliden, bevorzugt für Sauerstoff oder C₃-Alkylen steht,
wenn q = 1 und r = 1 ist, W und V jeweils unabhängig für C₂- bis C₆-Alkylen oder C₃- bis C₆-Alkyliden, bevorzugt C₃-Alkylen steht,
Z für ein C₁- bis C₆-Alkylen, bevorzugt C₂-Alkylen steht,
o für eine durchschnittliche Anzahl von Wiederholungseinheiten von 10 bis 500, bevorzugt 10 bis 100 steht, und
m für eine durchschnittliche Anzahl von Wiederholungseinheiten von 1 bis 10, bevorzugt 1 bis 6, weiter bevorzugt 1,5 bis 5 steht. Ebenso ist es möglich, dass Diphenole verwendet werden, in denen zwei oder mehrere Siloxanblöcke der allgemeinen Formel (1a) über Terephthalsäure und/oder Isophthalsäure miteinander unter Ausbildung von Estergruppen verknüpft sind.

Insbesondere bevorzugt sind (Poly)Siloxane der Formeln (3) und (4) 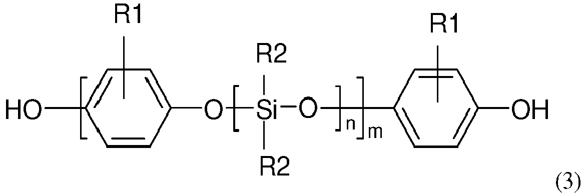 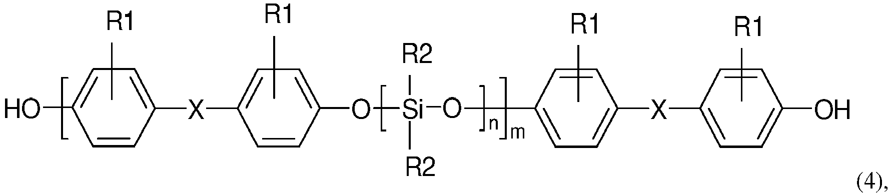
wobei R1 für Wasserstoff, C₁- bis C₄-Alkyl, vorzugsweise für Wasserstoff oder Methyl steht und insbesondere bevorzugt für Wasserstoff,
R2 unabhängig voneinander für Aryl oder Alkyl, bevorzugt für Methyl,
X für eine Einfachbindung, -SO₂-, -CO-, -O-, -S-, C₁- bis C₆-Alkylen, C₂- bis C₅-Alkyliden oder für C₆- bis C₁₂-Arylen, welches gegebenenfalls mit weiteren Heteroatome enthaltenden aromatischen Ringen kondensiert sein kann, steht,
X bevorzugt für eine Einfachbindung, C₁- bis C₅-Alkylen, C₂- bis C₅-Alkyliden, C₅- bis C₁₂-Cycloalkyliden, -O-, -SO- -CO-, -S-, -SO₂-, besonders bevorzugt steht X für eine Einfachbindung, Isopropyliden, C₅- bis C₁₂-Cycloalkyliden oder Sauerstoff, und ganz besonders bevorzugt für Isopropyliden steht,
n eine durchschnittliche Zahl von 10 bis 400, bevorzugt 10 und 100, insbesondere bevorzugt 15 bis 50 bedeutet und
m für eine durchschnittliche Zahl von 1 bis 10, bevorzugt von 1 bis 6 und insbesondere bevorzugt von 1,5 bis 5 steht.

Ebenso bevorzugt kann der Siloxanblock von folgender Struktur abgeleitet sein 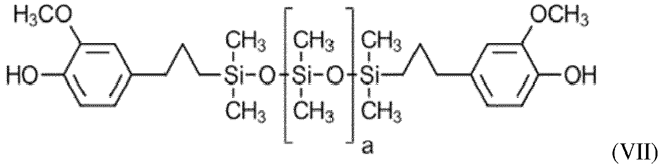 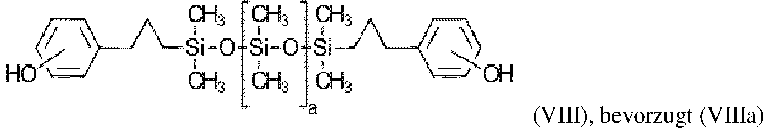 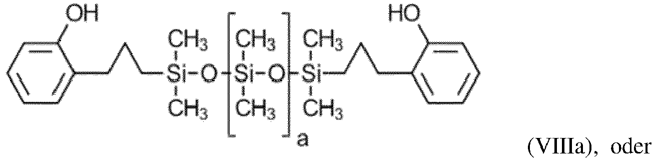 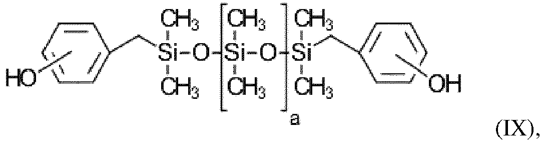 wobei a in Formel (VII), (VIII) und (IX) für eine durchschnittliche Zahl von 10 bis 400, bevorzugt 10 bis 100 und besonders bevorzugt für 15 bis 50 steht.

Dabei ist es ebenso bevorzugt, dass mindestens zwei gleiche oder verschiedene der Siloxanblöcke der allgemeinen Formeln (VII), (VIII) oder (IX) über Terephthalsäure und/oder Isophthalsäure miteinander unter Ausbildung von Estergruppen verknüpft sind.

Ebenso ist es bevorzugt, wenn in der Formel (1a) p = 0 ist, V für C₃-Alkylen steht, r = 1 ist, Z für C₂-Alkylen steht, R⁸ und R⁹ für Methyl stehen, q = 1 ist, W für C₃-Alkylen steht, m = 1 ist, R⁵ für Wasserstoff oder C₁- bis C₄-Alkyl, vorzugsweise für Wasserstoff oder Methyl, steht, R⁶ und R⁷ jeweils unabhängig voneinander für C₁- bis C₄-Alkyl, vorzugsweise für Methyl stehen und o für 10 bis 500 steht.

Im Falle der Homopolycarbonate wird nur ein Diphenol eingesetzt, im Falle von Copolycarbonaten werden zwei oder mehr verschiedene Diphenole eingesetzt. Das verwendete Diphenol oder die verwendeten mehreren verschiedenen Diphenole, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

In der gleichen Weise werden eventuell zu verwendende Verzweiger oder Verzweigermischungen der Synthese zugesetzt. Üblicherweise werden Trisphenole, Quarterphenole oder Säurechloride von Tri- oder Tetracarbonsäuren verwendet oder auch Gemische der Polyphenole oder der Säurechloride.

Einige der als Verzweiger verwendbaren Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tris-(4-hydroxyphenyl)-benzol, 1,1,1-Tri-(4-hydroxyphenyl)-ethan (THPE), Tris-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, Tetra-(4-hydroxyphenyl)-methan, Trisphenol oder 3,3-Bis-(3-methyl-4-hydroxyphenyl)-2-oxo-2,3-dihydroindol.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan oder Trisphenol.

Die Menge der gegebenenfalls einzusetzenden Verzweiger beträgt 0,05 Mol-% bis 2 Mol-%, bezogen wiederum auf Mole an jeweils eingesetzten Diphenolen, wobei die Verzweiger mit den Diphenolen vorgelegt werden.

Alle diese Maßnahmen zur Herstellung eines Polycarbonats sind dem Fachmann geläufig.

Für die Herstellung der Polyestercarbonate geeignete aromatische Dicarbonsäuren sind beispielsweise Orthophthalsäure, Terephthalsäure, Isophthalsäure, tert-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure, wobei diese Verbindungen auch als Säurechloride zum Einsatz kommen können.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Gemäß einem aus EP 0 304 691 A2 bekannten kontinuierlichen Phasengrenzflächenverfahren zur Herstellung von Polycarbonaten wird eine wässrige Phase aus Diphenolen und der gerade notwendigen Menge Alkalihydroxid mit einer Phosgen enthaltenen organischen Phase in einem Rohr unter Verwendung eines statischen Mischers zusammengeführt. Der Phosgenüberschuss ist mit 20 bis 100 Mol-% sehr hoch und die Verweilzeit im Reaktionsrohr für den ersten Reaktionsschritt liegt bei 10 bis 75 s. Mit diesem Verfahren können lediglich Prepolymere mit einem Molekulargewicht von 4000 bis 12000 g/mol hergestellt werden. Anschliessend erfolgt zwingend eine weitere Aufkondensierung unter Verwendung mindestens eines Katalysators, um zum gewünschten Molekulargewicht zu kommen. Geeignete Katalysatoren sind tertiäre Amine und Oniumsalzen. Bevorzugt werden Tributylamin, Triethylamin und N-Ethylpiperidin verwendet.

Der eingesetzte Amin-Katalysator kann offenkettig oder zyklisch sein, besonders bevorzugt sind Triethylamin (TEA) und N-Ethylpiperidin (EPP). Der Katalysator wird vorzugsweise als 1 bis 55 Gew.%-ige Lösung eingesetzt.

Unter Oniumsalzen werden hier Verbindungen wie NR₄X verstanden, wobei R ein Alkyl und/oder Arylrest und/oder ein H sein kann und X ein Anion ist, beispielsweise ein Chlorid-Ion, ein Hydroxid-Ion oder ein Phenolat-Ion.

Das ausreagierte, höchstens noch Spuren an (< 2 ppm) Chlorkohlensäurearylestern enthaltende mindestens zweiphasige Reaktionsgemisch lässt man zur Phasentrennung absitzen. Die wässrige alkalische Phase (Reaktionsabwasser) wird abgetrennt und die organische Phase mit verdünnter Salzsäure und Wasser extrahiert. Die vereinigten Wasserphasen werden der Abwasseraufarbeitung zugeführt, wo Lösungsmittel- und Katalysatoranteile durch Strippen oder Extraktion abgetrennt und rückgeführt werden. Anschließend werden nach der Einstellung eines bestimmten pH-Wertes von z.B. 6 bis 8, z.B. durch Salzsäurezugabe oder Phosphorsäurezugabe, die gegebenenfalls noch verbleibenden organischen Verunreinigungen wie z.B. Monophenol und/oder nicht umgesetztes Diphenol bzw. nicht umgesetzte Diphenole durch Behandlung mit Aktivkohle entfernt und die Wasserphase gegebenenfalls einer weiteren Verwendung, beispielsweise einer Chloralkalielektrolyse, zugeführt.

In einer anderen Variante der Aufarbeitung wird das Reaktionsabwasser nicht mit den Waschphasen vereinigt, aber nach Strippen oder Extraktion zur Abtrennung von Lösungsmitteln und Katalysatorresten, auf einem bestimmten pH-Wert von z.B. 6 bis 8, z.B. durch Salzsäurezugabe eingestellt und nach Abtrennung der noch verbleibenden organischen Verunreinigungen wie z.B. Monophenol und/oder nicht umgesetztes Diphenol oder nicht umgesetzte Diphenole durch Behandlung mit Aktivkohle der Chloralkalielektrolyse zugeführt.

Die Waschphasen können nach Entfernung der Lösungsmittel- und Katalysatoranteile durch Strippen oder Extraktion gegebenenfalls wieder der Synthese zugeführt werden.

Das Carbonylhalogenid, insbesondere Phosgen, kann flüssig, gasförmig oder gelöst in einem organischem Lösungsmittel oder Lösungsmittelgemisch eingesetzt werden.

Die Herstellung von Phosgen aus Kohlenmonoxid und Chlor ist bekannt, beispielsweise aus EP 0 881 986 A1, EP 1 640 341 A2, DE 332 72 74 A1, GB 583 477 A, WO 97/30932 A1, WO 96/16898 A1, oder US 6,713,035 B1.

Nach Eintrag des Phosgens kann es vorteilhaft sein, eine gewisse Zeit die organische Phase und die wässrige Phase zu durchmischen, bevor gegebenenfalls Verzweiger, sofern dieser nicht gemeinsam mit dem Bisphenolat dosiert wird, Kettenabbrecher und Katalysator zugegeben werden. Eine derartige Nachreaktionszeit kann nach jeder Dosierung von Vorteil sein. Diese Nachreaktionszeiten liegen, insofern sie eingelegt werden, zwischen 10 Sekunden und 60 Minuten, bevorzugt zwischen 30 sec. und 40 Minuten, besonders bevorzugt zwischen 1 und 15 min.

Die organische, das Polycarbonat enthaltende Phase muss nun von allen Kontaminationen alkalischer, ionischer oder katalytischer Art gereinigt werden.

Die organische Phase enthält auch nach einem oder mehreren Absetzvorgängen, gegebenenfalls unterstützt durch Durchläufe durch Absetzkessel, Rührkessel, Coalescer oder Separatoren bzw. Kombinationen aus diesen Maßnahmen - wobei gegebenenfalls Wasser in jedem oder einigen Trennschritten unter Umständen unter Verwendung von aktiven oder passiven Mischorganen zudosiert werden kann - noch Anteile der wässrigen alkalischen Phase in feinen Tröpfchen sowie den Katalysator, in der Regel ein tertiäres Amin.

Nach dieser groben Abtrennung der alkalischen, wässrigen Phase wird die organische Phase ein oder mehrmals mit verdünnten Säuren, Mineral-, Carbon- Hydroxycarbon-und/oder Sulfonsäuren gewaschen. Bevorzugt sind wässrige Mineralsäuren insbesondere Salzsäure, phosphorige Säure und Phosphorsäure oder Mischungen dieser Säuren. Die Konzentration dieser Säuren sollte im Bereich 0,001 bis 50 Gew. %, bevorzugt 0,01 bis 5 Gew. % liegen.

Weiterhin wird die organische Phase einem wässrigen Medium, beispielsweise mit entsalztem oder destilliertem Wasser, wiederholt gewaschen. Die Abtrennung der, gegebenenfalls mit Teilen der wässrigen Phase dispergierten, organischen Phase nach den einzelnen Waschschritten geschieht mittels Absetzkessel, Rührkessel, Coalescer oder Separatoren bzw. Kombinationen aus diesen Maßnahmen, wobei das Waschwasser zwischen den Waschschritten gegebenenfalls unter Verwendung von aktiven oder passiven Mischorganen zudosiert werden kann.

Zwischen diesen Waschschritten oder auch nach der Wäsche können gegebenenfalls Säuren, vorzugsweise gelöst im Lösungsmittel welches der Polycarbonatlösung zugrunde liegt, zugegeben werden. Bevorzugt werden hier Chlorwasserstoffgas und Phosphorsäure oder phosphorige Säure verwendet, die gegebenenfalls auch als Mischungen eingesetzt werden können.

Die so erhaltene gereinigte Polycarbonatlösung sollte nach dem letzten Trennvorgang nicht mehr als 5 Gew. %, bevorzugt weniger als 1 Gew. %, ganz besonders bevorzugt weniger als 0,5 Gew. % Wasser enthalten.

Die Isolierung des Polycarbonats aus der Lösung mit dem hochsiedenden Lösungsmittel, beispielsweise Chlorbenzol, kann durch Verdampfen des Lösungsmittels mittels Temperatur, Vakuum oder eines erhitzten Schleppgases erfolgen.

Bei einem derartigen Hochviskosaufarbeitungsschritt handelt es sich um eine Voreindampfung zur Konzentrationserhöhung des Polycarbonats, gefolgt von beispielsweise einem Strangverdampfer oder Ausdampfextruder zur Entfernung des Restlösemittels und Überführung in eine Polycarbonatschmelze. Abschließend wird das kontinuierlich hergestellte Polycarbonat nach Durchlaufen einer Abkühlstrecken hinter der Düsenplatte wie beispielsweise einem Wasserbad einer Granulierung unterzogen.

Geschieht die Konzentrierung der Polycarbonatlösung und eventuell auch die Isolierung des Polycarbonats durch Abdestillation des Lösungsmittels, gegebenenfalls durch Überhitzung und Entspannung, so spricht man von einem 'Flash-Verfahren" siehe auch "Thermische Trennverfahren", VCH Verlagsanstalt 1988, S. 114; wird statt dessen ein geheiztes Trägergas zusammen mit der einzudampfenden Lösung versprüht, so spricht man von einer "Sprühverdampfung/Sprühtrocknung" beispielhaft beschrieben in Vauck, "Grundoperationen chemischer Verfahrenstechnik", Deutscher Verlag für Grundstoffindustrie 2000, 11.Auflage, S. 690. Alle diese Verfahren sind in der Patentliteratur und in Lehrbüchern beschrieben und dem Fachmann geläufig.

Bei der Entfernung des Lösungsmittels durch Temperatur (Abdestillieren) oder dem technisch effektiveren Flash-Verfahren erhält man hochkonzentrierte Polycarbonatschmelzen. Bei dem bekannten Flashverfahren wird eine Polycarbonatlösung wiederholt unter leichtem Überdruck auf Temperaturen oberhalb des Siedepunktes unter Normaldruck erhitzt und diese, bezüglich des Normaldruckes, überhitzten Lösungen anschließend in ein Gefäß mit niedrigerem Druck, z.B. Normaldruck, entspannt. Es kann dabei von Vorteil sein, die Aufkonzentrationsstufen, oder anders ausgedrückt die Temperaturstufen der Überhitzung nicht zu groß werden zu lassen sondern lieber ein zwei- bis vierstufiges Verfahren zu wählen.

Aus der so erhaltenen hochkonzentrierten Polycarbonatschmelze können gemäß EP 2 096 131 A1 die Reste des Lösungsmittels entweder direkt aus der Schmelze mit Ausdampfextrudern (BE-A 866 991, EP-A 0 411 510, US-A 4 980 105, DE-A 33 32 065), Dünnschichtverdampfern (EP-A-0 267 025), Fallfilmverdampfern, Strangverdampfern oder durch Friktionskompaktierung (EP-A-0 460 450), gegebenenfalls auch unter Zusatz eines Schleppmittels, wie Stickstoff oder Kohlendioxid oder unter Verwendung von Vakuum (EP-A 0 039 96, EP-A 0 256 003, US-A 4 423 207), entfernt werden, alternativ auch durch anschließende Kristallisation (DE-A 34 29 960) und Ausheizen der Reste des Lösungsmittels in der festen Phase (US-A 3 986 269, DE-A 20 53 876).

Um eine solche Aufreinigung der erhaltenen hochkonzentrierten Polycarbonatschmelze zu ermöglichen, wird gemäß dem Stand der Technik als organische Phase ein Lösungsmittel eingesetzt, das ein Gemisch aus einem leichtsiedenden organischen Lösungsmittel und einem höhersiedenden organischen Lösungsmittel ist, siehe dazu auch EP 2 096 131 A1. Ein solches Lösungsmittelgemisch ist insbesondere zweckmäßig, wenn die Reste des Lösungsmittelgemischs mittels Ausdampfextruder oder Strangverdampfer erfolgen soll. Dabei beträgt der Anteil des leichtsiedenden organischen Lösungsmittels, beispielsweise Methylenchlorid, 40 bis 60 Gew.-% des Lösungsmittelgemischs, und der der Anteil des höhersiedenden organischen Lösungsmittels, beispielsweise Chlorbenzol, 60 bis 40 Gew.-% des Lösungsmittelgemischs, wobei sich der Anteil des leichtsiedenden Lösungsmittels und der Anteil des höhersiedenden Lösungsmittels zu 100 Gew.-% ergänzen.

Granulate erhält man, wenn möglich, durch direktes Abspinnen der Schmelze und anschließender Granulierung oder aber durch Verwendung von Austragsextrudern von denen in Luft oder unter Flüssigkeit, meist Wasser, abgesponnen wird. Werden Extruder benutzt, so kann man der Schmelze, vor diesem Extruder, gegebenenfalls unter Einsatz von statischen Mischern oder durch Seitenextruder im Extruder, Additive zusetzen.

Der Zusatz von Additiven dient der Verlängerung der Nutzungsdauer oder der Farbe (Stabilisatoren), der Vereinfachung der Verarbeitung (z.B. Entformer, Fließhilfsmittel, Antistatika) oder der Anpassung der Polycarbonateigenschaften an bestimmte Belastungen (Schlagzähmodifikatoren, wie Kautschuke; Flammschutzmittel, Farbmittel, Glasfasern).

Solche weiteren Additive, wie sie üblicherweise bei Polycarbonaten zugesetzt werden, sind insbesondere Antioxidantien, Entformungsmittel, verschiedene Flammschutzmittel, Antidrippingmittel wie Polytetrafluorethylen (Teflon) oder SAN-gekapseltes PTFE (z.B. Blendex 449), UV-Absorber, IR-Absorber, Schlagzähmodifikatoren, Antistatika, optische Aufheller, verschiedene Füllstoffe, Lichtstreumittel, Farbmittel wie organische Pigmente, verschiedene anorganische Pigmente wie z. B. Talk, Silikate oder Quarz und/oder Additive zur Lasermarkierung. Derartige Additive sind beispielsweise in EP-A 0 839 623, WO-A-96/15102, EP-A-0 500 496 oder im "Plastics Additives Handbook", Hans Zweifel, 5th Edition 2000, Hanser Verlag, München beschrieben, insbesondere Antidrippingmittel, in den für Polycarbonat üblichen Mengen. Diese Additive können einzeln oder auch im Gemisch zugesetzt werden.

Diese Additive können einzeln oder in beliebigen Mischungen oder mehreren verschiedenen Mischungen der Polycarbonatschmelze zugesetzt werden und zwar direkt bei der Isolierung des Polycarbonats oder aber nach Aufschmelzung von Granulat in einem sogenannten Compoundierungsschritt, wodurch ein Compound erhalten wird. Dabei können die Additive beziehungsweise deren Mischungen als Feststoff, also als Pulver, oder als Schmelze der Polycarbonatschmelze zugesetzt werden. Eine andere Art der Dosierung ist die Verwendung von Masterbatches oder Mischungen von Masterbatches der Additive oder Additivmischungen.

### Thermostabilisatoren:

Als Thermostabilisatoren sind insbesondere Phosphor-basierte Stabilisatoren, ausgewählt aus der Gruppe der Phosphate, Phosphite, Phosphonite, Phosphine und deren Mischungen, geeignet. Es können auch Mischungen von verschiedenen Verbindungen aus einer dieser Untergruppen eingesetzt werden, z.B. zwei Phosphite.

Als Thermostabilisatoren werden bevorzugt Phosphor-Verbindungen mit der Oxidationszahl +III, insbesondere Phosphine und/oder Phosphite, eingesetzt.

Als Thermostabilisatoren eignen sich besonders bevorzugt Triphenylphosphin, Tris-(2,4-di-tert-butylphenyl)phosphit (Irgafos^{®} 168), Tetrakis-(2,4-di-tert-butylphenyl)-[1,1-biphenyl]-4,4'-diylbisphosphonit, Octadecyl-3-(3,5-di-tert-butyl-4-hydroxyphenyl)-propionat (Irganox^{®} 1076), Bis-(2,4-dicumylphenyl)-pentaerythritoldiphosphit (Doverphos^{®} S-9228), Bis-(2,6-di-tert-butyl-4-methylphenyl)-pentaerythritoldiphosphit (ADK STAB PEP-36).

Sie werden allein oder im Gemisch, z. B. Irganox^{®} B900 (Gemisch aus Irgafos^{®} 168 und Irganox^{®} 1076 im Verhältnis 4:1) oder Doverphos^{®} S-9228 mit Irganox^{®} B900 bzw. Irganox^{®} 1076, eingesetzt.

Die Thermostabilisatoren werden bevorzugt in Mengen bis zu 1,0 Gew.-%, weiter bevorzugt 0,003 Gew.-% bis 1,0 Gew.-%, noch weiter bevorzugt 0,005 Gew.-% bis 0,5 Gew.-%, besonders bevorzugt 0,01 Gew.-% bis 0,2 Gew.-%, eingesetzt.

### UV-Sabilisatoren:

Weitere bevorzugte Additive sind spezielle UV-Stabilisatoren, die eine möglichst geringe Transmission unterhalb 400 nm und eine möglichst hohe Transmission oberhalb von 400 nm besitzen. Für den Einsatz in der erfindungsgemäßen Zusammensetzung besonders geeignete Ultraviolett-Absorber sind Benzotriazole, Triazine, Benzophenone und/oder arylierte Cyanoacrylate.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin^{®} 234, BASF SE, Ludwigshafen), 2-(2'-Hydroxy-5'-(tert.-octyl)-phenyl)-benzotriazol (Tinuvin^{®} 329, BASF SE, Ludwigshafen), Bis-(3-(2H-benztriazolyl)-2-hydroxy-5-tert.-octyl)methan (Tinuvin^{®} 360, BASF SE, Ludwigshafen), 2-(4,6-Diphenyl-1,3,5-triazin-2-yl)-5-(hexyloxy)-phenol (Tinuvin^{®} 1577, BASF SE, Ludwigshafen), 2-(5chloro-2H-benzotriazol-2-yl)-6-(1,1-dimethylethyl)-4-methyl-phenol (Tinuvin^{®} 326, BASF SE, Ludwigshafen), sowie Benzophenone wie 2,4-Dihydroxybenzophenon (Chimasorb^{®} 22 , BASF SE, Ludwigshafen) und 2-Hydroxy-4-(octyloxy)-benzophenon (Chimassorb^{®} 81, BASF SE, Ludwigshafen), 2,2-Bis[[(2-cyano-1-oxo-3,3-diphenyl-2-propenyl)oxy]-methyl]-1,3-propandiylester (9CI) (Uvinul 3030, BASF SE, Ludwigshafen), 2-[2-Hydroxy-4-(2-ethylhexyl)oxy]phenyl-4,6-di(4-phenyl)phenyl-1,3,5-triazine (Tinuvin 1600, BASF SE, Ludwigshafen), Tetraethyl-2,2'-(1,4-phenylen-dimethyliden)-bismalonat (Hostavin B-Cap, Clariant AG) oder N-(2-Ethoxyphenyl)-N'-(2-ethylphenyl)-ethandiamid (Tinuvin 312, CAS-Nr. 23949-66-8, BASF SE, Ludwigshafen).

Besonders bevorzugte spezielle UV-Stabilisatoren sind Tinuvin 360, Tinuvin 329, Tinuvin 326, Tinuvin 1600, Tinuvin 312, Uvinul 3030 und/oder Hostavin B-Cap ganz besonders bevorzugt sind Tinuvin 329 und Tinuvin 360.

Es können auch Mischungen der genannten Ultraviolett-Absorber eingesetzt werden.

Sofern UV-Absorber enthalten sind, enthält die Zusammensetzung bevorzugt Ultraviolett-Absorber in einer Menge bis 0,8 Gew.-%, bevorzugt 0,05 Gew.-% bis 0,5 Gew.-%, weiter bevorzugt 0,08 Gew.-% bis 0,4 Gew.-%, ganz besonders bevorzugt 0,1 Gew.-% bis 0,35 Gew.-%, bezogen auf die Gesamtzusammensetzung.

### Umesterungsinhibitoren:

Die erfindungsgemäßen Zusammensetzungen können auch Phosphate oder Sulfonsäureester als Umesterungsstabilisatoren enthalten. Bevorzugt ist Triisooctylphosphat als Umesterungsstabilisator enthalten. Triisooctylphosphat wird bevorzugt in Mengen von 0,003 Gew.-% bis 0,05 Gew.-%, weiter bevorzugt 0,005 Gew.-% bis 0,04 Gew.-% und besonders bevorzugt von 0,01 Gew.-% bis 0,03 Gew.-%, bezogen auf die Gesamtzusammensetzung, eingesetzt.

Außerdem können Verarbeitungshilfsmittel wie Entformungsmittel, meist Derivate langkettiger Fettsäuren, zugesetzt werden. Bevorzugt sind z.B. Pentaerythrittetrastearat und Glycerinmonostearat. Sie werden allein oder im Gemisch vorzugsweise in einer Menge von 0,02 bis 1 Gew.-%, bezogen auf die Masse der Zusammensetzung eingesetzt.

Geeignete flammhemmende Additive sind Phosphatester, d.h. Triphenylphosphat, Resorcindiphosphorsäureester, bromhaltige Verbindungen, wie bromierte Phosphorsäureester, bromierte Oligocarbonate und Polycarbonate, sowie bevorzugt Salze fluorierter organischer Sulfonsäuren.

Geeignete Schlagzähmacher sind Butadienkautschuk mit aufgepfropftem Styrol-Acrylnitril oder Methylmethacrylat, Ethylen-Propylen-Kautschuke mit aufgepfropftem Maleinsäureanhydrid, Ethyl- und Butylacrylatkautschuke mit aufgepfropftem Methylmethacrylat oder Styrol-Acrylnitril, interpenetrierende Siloxan- und Acrylat-Netzwerke mit aufgepfropftem Methylmethacrylat oder Styrol-Acrylnitril.

Außerdem können Farbmittel, wie organische Farbstoffe oder Pigmente oder anorganische Pigmente, IR-Absorber, einzeln, im Gemisch oder auch in Kombination mit Stabilisatoren, Glasfasern, Glas(hohl)kugeln, anorganischen Füllstoffen zugesetzt werden.

Ein wesentlicher Parameter zur Charakterisierung des entstehenden Polycarbonats besteht in der Angabe der Uneinheitlichkeit U, ausgedrückt durch den Term U = (M_{w}/Mₙ) - 1, der Molekulargewichtsverteilung des Polycarbonats, bestimmt mittels Gelpermeationschromotographie (GPC). Dabei stellt M_{w} das Gewichtsmittel und Mₙ das Zahlenmittel der Molekulargewichtsverteilung dar. Je kleiner die Uneinheitlichkeit U des Polycarbonats, desto günstigere mechanische Eigenschaften kann man bei ansonsten gleicher Viskosität erwarten. Dabei wurden die Molekulargewichte M_{w} (Gewichtsmittel) und Mₙ (Zahlenmittel) der untersuchten Polycarbonate mittels Gelpermeationschromotographie (Größenausschlusschromatographie; in Anlehnung an DIN 55672-1 (2007-08) unter Verwendung einer BPA-Polycarbonat-Kalibrierung bestimmt. Dabei wurde die Methode 2301-0257502-09D (aus dem Jahre 2009 in deutscher Sprache) der Currenta GmbH & Co. OHG, Leverkusen angewandt. Dichlormethan wurde als Elutionsmittel verwendet. Die Säulenkombination bestand aus vernetzten Styrol-Divinylbenzolharzen mit einem Durchmesser von ca. 7,5 mm und einer Länge von ca. 300 mm Die Konzentration der untersuchten Lösungen betrug 0,2 Gew./%. Die Flussrate wurde auf 1,0 ml/min eingestellt, die Temperatur der Lösung betrug 30°C. Die Detektion erfolgte mit Hilfe eine Brechungsindex (RI) Detektors.

Das oben beschriebene kontinuierliche Verfahren zur Herstellung von Polycarbonat hat zwei Nachteile: Zum einen erhält man in sehr vielen Fällen eine größere Uneinheitlichkeit U = (M_{w}/Mₙ) - 1 des Polycarbonats. Zum Anderen lässt sich das organische Lösungsmittel, welches das entstandene Polycarbonat enthält und das 40 bis 60 Gew.-% eines leichtsiedenden organischen Lösungsmittels, beispielsweise Methylenchlorid, und 60 bis 40 Gew.-% eines höhersiedenden organischen Lösungsmittels, beispielsweise Chlorbenzol, enthält, sehr häufig nur aufwändig salz- und alkalifrei waschen, wodurch entsprechende Rückstände auch im Polycarbonat verbleiben. Beide Nachteile wirken sich ungünstig auf das Eigenschaftsprofil des Polycarbonats aus. So verschlechtern beispielsweise Alkaliionen wie beispielsweise Natriumionen die Hydrolysestabilität und Schmelzestabilität eines Polycarbonats und führen bei thermischer Belastung, beispielsweise bei einer Extrusion des Polycarbonats, zur Verbreiterung dessen Molekulargewichtsverteilung.

Ausgehend vom Stand der Technik bestand daher die Aufgabe, ein Verfahren zur kontinuierlichen Herstellung von Polycarbonat nach dem Phasengrenzflächenverfahren zur Verfügung zu stellen, das die genannten Nachteile des Stands der Technik überwindet. Insbesondere soll das erfindungsgemäße Verfahren ein Polycarbonat zur Verfügung stellen, das im Vergleich zu einem Polycarbonat, das gemäß einem Phasengrenzflächenverfahren nach dem Stand der Technik hergestellt wurde, eine geringere Uneinheitlichkeit U = (M_{w}/Mₙ) - 1 aufweist. Auch soll sich bei dem erfindungsgemäßen Verfahren die organische Phase, die das Polycarbonat enthält, weniger aufwändig salz- und alkalifrei waschen lassen, als dies bei einem Phasengrenzflächenverfahren nach dem Stand der Technik der Fall ist. Trotzdem soll der besseren Aufreinigung der erhaltenen hochkonzentrierten Polycarbonatschmelze wegen diese Aufreinigung aus einem organisches Lösungsmittelgemisch heraus erfolgen, das mindestens 40 Gew.-% eines höhersiedenden Lösungsmittels aufweist.

Überraschend wurde nun gefunden, dass ein Verfahren gemäß Anspruch 1 die genannten Nachteile des Stands der Technik überwindet.

Gegenstand der Erfindung ist daher gemäß einer ersten Ausführungsform ein Verfahren zur kontinuierlichen Herstellung eines Polycarbonats nach dem Phasengrenzflächenverfahren, wobei das Verfahren wenigstens folgende Schritte umfasst:
(a) Lösen einer Dihydroxyarylverbindung in einer wässrigen Phase und Lösen eines Carbonylhalogenids in einer organischen Phase, wobei die wässrige Phase ein Alkalihydroxid enthält und die organische Phase ein organisches Lösungsmittel mit einer Zusammensetzung (A) enthält;
(b) Umsetzung der in der wässrigen Phase gelösten Dihydroxyarylverbindung mit dem in der organischen Phase gelösten Carbonylhalogenid zu einem Reaktionsgemisch enthaltend ein in der organischen Phase gelöstes Polycarbonat und ein in der wässrigen Phase gelöstes Alkalihalogenid und Alkalicarbonat;
(c) Abtrennung der organischen das Polycarbonat aus Schritt (b) enthaltenden Phase von der wässrigen ein gelöstes Alkalihalogenid und Alkalicarbonat enthaltenden Phase;
(d) Waschen der organischen das Polycarbonat aus Schritt (b) enthaltenden Phase mit einem wässrigen Medium;
(e) Veränderung der Zusammensetzung des organischen Lösungsmittels der organischen das Polycarbonat aus Schritt (b) enthaltenden Phase, bis ausgehend von der Zusammensetzung (A) eine Zusammensetzung (B) des organischen Lösungsmittels erreicht ist;
(f) Abtrennen des in Schritt (b) erhaltenen Polycarbonats aus der organischen Phase,
wobei das organische Lösungsmittel der Zusammensetzung (A)
(i) 80 bis 100 Gew.-%, bevorzugt 90 bis 100 Gew.-%, besonders bevorzugt 95 bis 100 Gew.-% eines leichtsiedenden organischen Lösungsmittels enthält, und
(ii) 20 bis 0 Gew.-%, bevorzugt 10 bis 0 Gew.-%, besonders bevorzugt 5 bis 0 Gew.-% eines höhersiedenden organischen Lösungsmittels enthält,
   wobei die Summe aus dem Gehalt an leichtsiedendem organischen Lösungsmittel und dem Gehalt an höhersiedendem organischem Lösungsmittel in der Zusammensetzung (A) 100 Gew.-% beträgt,
   und wobei das organische Lösungsmittel der Zusammensetzung (B)
(iii) 30 bis 70 Gew.-%, bevorzugt 40 bis 60 Gew.-%, eines leichtsiedenden organischen Lösungsmittels enthält, und
(iv) 70 bis 30 Gew.-%, bevorzugt 60 bis 40 Gew.-% eines höhersiedenden organischen Lösungsmittels enthält,
wobei die Summe aus dem Gehalt an leichtsiedendem organischen Lösungsmittel und dem Gehalt an höhersiedendem organischem Lösungsmittel in der Zusammensetzung (B) 100 Gew.-% beträgt.

Durch diese Maßnahme wird ein Polycarbonat zur Verfügung gestellt, das eine geringere Uneinheitlichkeit U = (M_{w}/Mₙ) - 1 aufweist als ein Polycarbonat, das nach einem Phasengrenzflächenverfahren gemäß dem Stand der Technik in einem organischen Lösungsmittelgemisch, das im Wesentlichen unverändert gehalten wird, hergestellt wurde, und sich die organische Phase, die das Polycarbonat enthält, weniger umständlich salz- und alkalifrei waschen lässt, als dies bei einem Phasengrenzflächenverfahren nach dem Stand der Technik der Fall ist, und trotzdem das in Schritt (b) erhaltenen Polycarbonat aus der organischen Phase abgetrennt werden kann, die mehr als 40 Gew.-% eines höhersiedenden organischen Lösungsmittels enthält.

Erfindungsgemäß bevorzugt ist dabei, dass
der Siedepunkt des höhersiedenden organischen Lösungsmittels von 40 bis 150 °C, bevorzugt von 60 bis 100 °C, höher ist als der Siedepunkt des leichtsiedenden organischen Lösungsmittels.
Diese bevorzugte Ausführungsform des erfindungsgemäßen Verfahrens stellt eine zweite Ausführungsform nach der oben dargestellten ersten Ausführungsform dar.

Durch diese Maßnahme wird erreicht, dass sich in Schritt (e) die Veränderung der Zusammensetzung des organischen Lösungsmittels der organischen das Polycarbonat aus Schritt (b) enthaltenden Phase, bis ausgehend von der Zusammensetzung (A) eine Zusammensetzung (B) des organischen Lösungsmittels erreicht ist, besonders leicht bewerkstelligen lässt.

Weiter erfindungsgemäß bevorzugt ist dabei, dass
der Siedepunkt des leichtsiedenden organischen Lösungsmittels 30 °C bis 70 °C beträgt, bevorzugt 35 °C bis 65 °C beträgt, und
der Siedepunkt des höhersiedenden organischen Lösungsmittels 100 °C bis 210 °C beträgt, bevorzugt 105 °C bis 140 °C beträgt.
Diese weiter bevorzugte Ausführungsform des erfindungsgemäßen Verfahrens stellt eine dritte Ausführungsform nach der oben dargestellten ersten Ausführungsform oder der oben dargestellten zweiten Ausführungsform dar.

Durch diese Maßnahme wird erreicht, dass sich in Schritt (e) die Veränderung der Zusammensetzung des organischen Lösungsmittels der organischen das Polycarbonat aus Schritt (b) enthaltenden Phase, bis ausgehend von der Zusammensetzung (A) eine Zusammensetzung (B) des organischen Lösungsmittels erreicht ist, ganz besonders leicht bewerkstelligen lässt.

Erfindungsgemäß besonders bevorzugt ist dabei, dass
in Schritt (e) leichtsiedendes organisches Lösungsmittel aus der organischen Phase entfernt wird und höhersiedendes organisches Lösungsmittel zur organischen Phase zugegeben wird.
Diese besonders bevorzugte Ausführungsform des erfindungsgemäßen Verfahrens stellt eine vierte Ausführungsform nach einer der oben dargestellten Ausführungsformen dar, insbesondere stellt diese vierte Ausführungsform eine Ausführungsform nach der oben dargestellten ersten Ausführungsform dar.

Durch diese Maßnahme wird dass sich in Schritt (e) die Veränderung der Zusammensetzung des organischen Lösungsmittels der organischen das Polycarbonat aus Schritt (b) enthaltenden Phase, bis ausgehend von der Zusammensetzung (A) eine Zusammensetzung (B) des organischen Lösungsmittels erreicht ist, ganz besonders leicht bewerkstelligen lässt.

Weiter erfindungsgemäß besonders bevorzugt ist dabei, dass
in Schritt (e) leichtsiedendes organisches Lösungsmittel durch Verdampfen aus der organischen Phase entfernt wird.
Diese weiter besonders bevorzugte Ausführungsform des erfindungsgemäßen Verfahrens stellt eine fünfte Ausführungsform nach der oben dargestellten vierten Ausführungsform dar.

Durch diese Maßnahme wird eine besonders einfache und gute Abtrennung des leichtsiedenden Lösungsmittels gewährleistet.

Erfindungsgemäß ganz besonders bevorzugt ist dabei, dass
die Masse des entfernten leichtsiedenden organischen Lösungsmittels von 80 bis 120 %, bevorzugt von 90 bis 110 %, besonders bevorzugt von 95 bis 105 %, der Masse des zugegebenen höhersiedenden organischen Lösungsmittel ist.
Diese ganz besonders bevorzugte Ausführungsform des erfindungsgemäßen Verfahrens stellt eine sechste Ausführungsform nach der oben dargestellten vierten Ausführungsform oder der oben dargestellten fünften Ausführungsform dar.

Durch diese Maßnahme wird gewährleistet, dass das Polycarbonat nicht vorzeitig aus der organischen Phase ausfällt.

Nach Weiter erfindungsgemäß ganz besonders bevorzugt ist dabei, dassdas leichtsiedende Lösungsmittel nur ein Lösungsmittel umfasst.
Diese weiter ganz besonders bevorzugte Ausführungsform des erfindungsgemäßen Verfahrens stellt eine siebte Ausführungsform nach einer der oben dargestellten Ausführungsformen dar, insbesondere stellt diese siebte Ausführungsform eine Ausführungsform nach der oben dargestellten ersten Ausführungsform dar.

Durch diese Maßnahme wird erreicht, dass das Verfahren vereinfacht wird, da nur ein leichtsiedendes Lösungsmittel vorgehalten werden muss, wodurch außerdem eine einfachere apparative Ausstattung ermöglicht wird.

Erfindungsgemäß insbesondere bevorzugt ist dabei, dass
das höhersiedende Lösungsmittel nur ein Lösungsmittel umfasst.
Diese insbesondere bevorzugte Ausführungsform des erfindungsgemäßen Verfahrens stellt eine achte Ausführungsform nach einer der oben dargestellten Ausführungsformen dar, insbesondere stellt diese achte Ausführungsform eine Ausführungsform nach der oben dargestellten ersten Ausführungsform dar.

Durch diese Maßnahme wird erreicht, dass das Verfahren vereinfacht wird, da nur ein höhersiedendes Lösungsmittel vorgehalten werden muss, und wodurch außerdem eine einfachere apparative Ausstattung ermöglicht wird.

Alternativ zu der siebten Ausführungsform kann das leichtsiedende Lösungsmittel ein Gemisch von mindestens zwei leichtsiedenden Lösungsmitteln sein. Alternativ zu der achten Ausführungsform kann das das höhersiedende Lösungsmittel ein Gemisch von mindestens zwei höhersiedenden Lösungsmitteln sein.

Weiter erfindungsgemäß insbesondere bevorzugt ist dabei, dass
das leichtsiedende organische Lösungsmittel und das höhersiedende organische Lösungsmittel vollständig ineinander mischbar sind und die Löslichkeit von Wasser im leichtsiedenden Lösungsmittel maximal 0,2 g/L bei 20 °C beträgt und die Löslichkeit von Wasser im höhersiedenden Lösungsmittel maximal 0,3 g/L bei 20 °C beträgt.
Diese weiter insbesondere bevorzugte Ausführungsform des erfindungsgemäßen Verfahrens stellt eine neunte Ausführungsform nach einer der oben dargestellten Ausführungsformen dar, insbesondere stellt diese neunte Ausführungsform eine Ausführungsform nach der oben dargestellten ersten Ausführungsform dar.

Durch diese Maßnahme wird verhindert, dass mit dem gelösten Wasser darin gelöstes Alkalihalogenid aus Schritt (b) die organischen Lösungsmittel und dadurch auch das erhaltene Polycarbonat verunreinigen. Solche Verunreinigungen verschlechtern, wie bereits oben erklärt, die Hydrolysestabilität und Schmelzestabilität eines Polycarbonats und führen bei thermischer Belastung, beispielsweise bei Spritzguss oder einer Extrusion des Polycarbonats, zur Verbreiterung dessen Molekulargewichtsverteilung.

Weiter erfindungsgemäß insbesondere bevorzugt ist dabei, dass
das leichtsiedende Lösungsmittel aus der Gruppe umfassend die Mitglieder Methylenchlorid, Chloroform, Trichlorethylen, 1,1,1-Trichlorethan und 1,1,2-Trichlorethan oder einem Gemisch aus zwei oder mehreren dieser Mitglieder ausgewählt ist, bevorzugt das leichtsiedende Lösungsmittel Methylenchlorid oder Chloroform oder ein Gemisch aus Methylenchlorid und Chloroform ist, besonders bevorzugt das leichtsiedende Lösungsmittel Methylenchlorid ist.
Diese weiter insbesondere bevorzugte Ausführungsform des erfindungsgemäßen Verfahrens stellt eine zehnte Ausführungsform nach einer der oben dargestellten Ausführungsformen dar, insbesondere stellt diese zehnte Ausführungsform eine Ausführungsform nach der oben dargestellten ersten Ausführungsform dar.

Durch diese Maßnahme wird zum einen eine besonders geringe Uneinheitlichkeit U = (M_{w}/Mₙ) - 1 erreicht, zum anderen erreicht, dass sich die organische Phase, die das Polycarbonat enthält, besonders wenig umständlich salz- und alkalifrei waschen lässt - insbesondere durch bessere Phasentrennung durch geringere Emulsionsbildung - und dass sich in Schritt (e) die Veränderung der Zusammensetzung des organischen Lösungsmittels der organischen das Polycarbonat aus Schritt (b) enthaltenden Phase, bis ausgehend von der Zusammensetzung (A) eine Zusammensetzung (B) des organischen Lösungsmittels erreicht ist, besonders leicht bewerkstelligen lässt.

Erfindungsgemäß ganz insbesondere bevorzugt ist dabei, dass
das höhersiedende Lösungsmittel Chlorbenzol oder Toluol oder ein Gemisch aus Chlorbenzol und Toluol umfasst, bevorzugt das höhersiedende Lösungsmittel Chlorbenzol oder Toluol oder ein Gemisch aus Chlorbenzol und Toluol ist, besonders bevorzugt das höhersiedende Lösungsmittel Chlorbenzol ist.
Diese ganz insbesondere bevorzugte Ausführungsform des erfindungsgemäßen Verfahrens stellt eine elfte Ausführungsform nach einer der oben dargestellten Ausführungsformen dar, insbesondere stellt diese elfte Ausführungsform eine Ausführungsform nach der oben dargestellten ersten Ausführungsform dar.

Ganz besonders bevorzugt ist das leichtsiedende Lösungsmittel Methylenchlorid wobei gleichzeitig das höhersiedende Lösungsmittel Chlorbenzol ist.

Durch diese Maßnahme wird zum einen eine besonders geringe Uneinheitlichkeit U = (M_{w}/Mₙ) - 1 erreicht, zum anderen erreicht, dass sich die organische Phase, die das Polycarbonat enthält, besonders wenig umständlich salz- und alkalifrei waschen lässt - insbesondere durch bessere Phasentrennung durch geringere Emulsionsbildung - und dass sich in Schritt (e) die Veränderung der Zusammensetzung des organischen Lösungsmittels der organischen das Polycarbonat aus Schritt (b) enthaltenden Phase, bis ausgehend von der Zusammensetzung (A) eine Zusammensetzung (B) des organischen Lösungsmittels erreicht ist, besonders leicht bewerkstelligen lässt.

Erfindungsgemäß ganz insbesondere bevorzugt ist dabei, dass das in Schritt (e) entfernte leichtsiedende Lösungsmittel wieder zur Herstellung eines organischen Lösungsmittels mit einer Zusammensetzung (A) verwendet wird. Dieses Lösungsmittel mit einer Zusammensetzung (A) kann dann wieder in Schritt (a) eingesetzt werden. Durch diese Maßnahme wird das leichtsiedende Lösungsmittel wiederverwendet und somit dessen Verbrauch vermindert.

Diese ganz insbesondere bevorzugte Ausführungsform des erfindungsgemäßen Verfahrens stellt eine zwölfte Ausführungsform nach der oben dargestellten vierten Ausführungsform oder der oben dargestellten fünften Ausführungsform dar.

Weiter erfindungsgemäß ganz insbesondere bevorzugt ist dabei, dass
nach Abtrennen des in Schritt (b) erhaltenen Polycarbonats aus der organischen Phase in Schritt (f) die organische Phase nach Schritt (e) zur Herstellung des organischen Lösungsmittels der Zusammensetzung (B) zurückgeführt wird.
Diese weiter ganz insbesondere bevorzugte Ausführungsform des erfindungsgemäßen Verfahrens stellt eine dreizehnte Ausführungsform nach einer der oben dargestellten Ausführungsformen dar, insbesondere stellt diese dreizehnte Ausführungsform eine Ausführungsform nach der oben dargestellten ersten Ausführungsform dar.

Durch diese Maßnahme wird das höhersiedende Lösungsmittel wiederverwendet und somit dessen Verbrauch vermindert.

Der Gehalt an Polycarbonat in der organischen Phase beträgt nach Abtrennung dieser organischen das Polycarbonat enthaltenden Phase von der wässrigen ein gelöstes Alkalihalogenid enthaltenden Phase gemäß Schritt (c) und vor Schritt (e) von 12 bis 25 Gew.-%, bevorzugt von 13 bis 22 Gew.-%.

Der Gehalt an Polycarbonat in der organischen Phase beträgt nach Veränderung der Zusammensetzung des organischen Lösungsmittels der organischen das Polycarbonat aus Schritt (b) enthaltenden Phase gemäß Schritt (e) und vor Schritt (f) von 10 bis 22 Gew.-%, bevorzugt von 13 bis 20 Gew.-%.

Da das organische Lösungsmittel der Zusammensetzung (A) eine andere Dichte als das das organische Lösungsmittel der Zusammensetzung (B) haben kann, kann sich der Massenanteil an Polycarbonat im organischen Lösungsmittel beim Austausch des Lösungsmittels ändern, ohne dass die Stoffmenge an Polycarbonat sich ändert.

Gegenstand der vorliegenden Anmeldung ist auch ein Polycarbonat, wie es nach dem erfindungsgemäßen Verfahren erhalten wird, und dessen Verwendung zur Herstellung von Extrudaten und Formkörpern, insbesondere solchen zur Verwendung zur Herstellung von transparenten Gegenständen, ganz besonders im Bereich optischer Anwendungen wie z.B. Platten, Stegplatten, Verglasungen, Streuscheiben, Lampenabdeckungen oder optischer Datenspeicher, wie Audio-CD, CD-R(W), DVD, DVD-R(W), Minidiscs in ihren verschiedenen nur lesbaren oder aber einmalbeschreibbaren gegebenenfalls auch wiederholt beschreibbaren Ausführungsformen.

Die Extrudate und Formkörper aus dem erfindungsgemäßen Polycarbonat sind ebenfalls Gegenstand der vorliegenden Anmeldung.

Weitere Anwendungen, ohne jedoch den Gegenstand der vorliegenden Erfindung einzuschränken, sind beispielsweise:
- Sicherheitsscheiben, die bekanntlich in vielen Bereichen von Gebäuden, Fahrzeugen und Flugzeugen erforderlich sind, sowie als Schilde von Helmen oder Visiere.
- Folien.
- Blaskörper (s.a. US-A-2 964 794), beispielsweise 1 bis 5 Gallon Wasserflaschen.
- Lichtdurchlässige Platten, wie Massivplatten oder insbesondere Hohlkammerplatten, beispielsweise zum Abdecken von Gebäuden wie Bahnhöfen, Gewächshäusern und Beleuchtungsanlagen.
- Optische Datenspeicher, wie Audio CD's, CD-R(W)'s, DCD's, DVD-R(W)'s, Minidiscs und den Folgeentwicklungen.
- Ampelgehäuse oder Verkehrsschilder.
- Geschäumte Produkte mit offener oder geschlossener gegebenenfalls bedruckbarer Oberfläche
- Fäden und Drähte (siehe auch DE-A-11 37 167).
- Lichttechnische Anwendungen, gegebenenfalls unter Verwendung von Glasfasern für Anwendungen im transluzenten Bereich .
- LED-Anwendungen
- Transluzente Einstellungen mit einem Gehalt an Bariumsulfat und oder Titandioxid und oder Zirkoniumoxid bzw. organischen polymeren Acrylatkautschuken (siehe auch EP-A-0 634 445, EP-A-0 269 324) zur Herstellung von lichtdurchlässigen und lichtstreuenden Formteilen.
- Präzisionsspritzgussteile, wie Halterungen, z.B. Linsenhalterungen; hier wird gegebenenfalls ein Polycarbonat mit Glasfasern und einem gegebenenfalls zusätzlichen Gehalt von 1 bis 10 Gew.-% Molybdändisulfid (bezogen auf die gesamte Formmasse) verwendet.
- optische Geräteteile, insbesondere Linsen für Foto- und Filmkameras (siehe auch DE-A-27 01 173).
- Lichtübertragungsträger, insbesondere Lichtleiterkabel (siehe auch EP-A-0 089 801) und Beleuchtungsleisten.
- Elektroisolierstoffe für elektrische Leiter und für Steckergehäuse und Steckverbinder sowie Kondensatoren.
- Mobiltelefongehäuse.
- Network interface devices.
- Trägermaterialien für organische Fotoleiter.
- Leuchten, Scheinwerferlampen, Streulichtscheiben oder innere Linsen.
- Medizinische Anwendungen wie Oxygenatoren, Dialysatoren.
- Lebensmittelanwendungen, wie Flaschen, Geschirr und Schokoladenformen.
- Anwendungen im Automobilbereich, wie Verglasungen oder in Form von Blends mit ABS als Stoßfänger.
- Sportartikel wie Slalomstangen, Skischuhschnallen.
- Haushaltsartikel, wie Küchenspülen, Waschbecken, Briefkästen.
- E&E-Anwendungen, wie z.B. Gehäuse oder Elektroverteilerkästen.
- Gehäuse für elektrische Geräte wie Zahnbürsten, Föne, Kaffeemaschinen, Werkzeugmaschinen, wie Bohr-, Fräs-, Hobelmaschinen und Sägen.
- Waschmaschinen-Bullaugen.
- Schutzbrillen, Sonnenbrillen, Korrekturbrillen bzw. deren Linsen.
- Lampenabdeckungen.
- Verpackungsfolien.
- Chip-Boxen, Chipträger, Boxen für Si-Wafer.
- Sonstige Anwendungen wie Stallmasttüren oder Tierkäfige.
- Verwendung als Feedstock zur Herstellung von Polycarbonatblends

### Figur

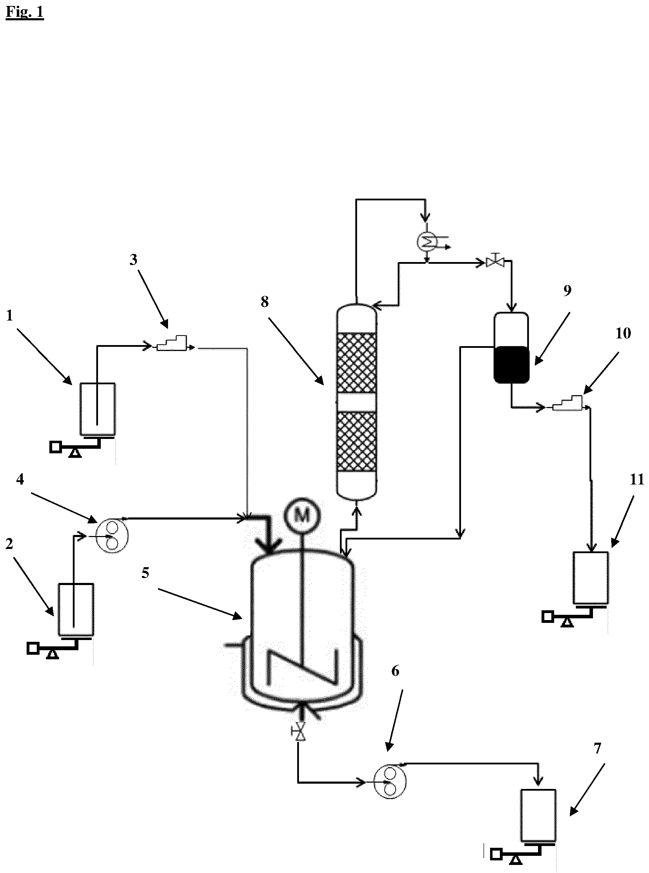

Figur 1 zeigt ein Beispiel für eine Anordnung von Apparaten, mit der der Verfahrensschritt (e) von Anspruch 1 durchgeführt werden kann, ohne dass die Erfindung auf diese Anordnung von Apparaten zur Durchführung von Verfahrensschritt (e) von Anspruch 1 beschränkt werden soll.

Dabei sind:
1 Vorlagebehälter gefüllt mit 100 gew.-%igem Chlorbenzol;
2 Vorlagebehälter gefüllt mit einer ca. 20 gew.-%igen Lösung eines Polycarbonats in Methylenchlorid;
3 Pumpe;
4 Pumpe;
5 Rührkessel mit Rührer und Außenbeheizung;
6 Pumpe;
7 Sammelbehälter gefüllt mit einer Lösung enthaltend 15 Gew.-% Polycarbonat, 42,5 Gew.-% Methylenchlorid und 42,5 Gew.-% Chlorbenzol;
8 Kolonne zur Einstellung eines Gleichgewichts zwischen Chlorbenzol und Methylenchlorid;
9 Rücklaufbehälter gefüllt mit mit 100 gew.-%igem Methylenchlorid zur Einstellung eines Gleichgewichts zwischen Chlorbenzol und Methylenchlorid;
10 Pumpe;
11 Auffangbehälter für 100 gew.-%iges Methylenchlorid (Rückgewinnung).

### Ausführungsbeispiele

Im Folgenden wird die Erfindung anhand von Ausführungsbeispielen näher beschrieben, ohne dass die Erfindung auf diese Beispiele eingeschränkt werden soll.

### Eingesetztes Polycarbonat:

### Polycarbonat 1:

Ein nach dem Phasengrenzflächenverfahren in reinem Methlenchlorid unter aminischer Katalyse hergestelltes Polycarbonat auf der Grundlage von BPA und t-Butylphenol als Kettenabbrecher mit einem Molekulargewicht M_{w} von 29360 g/mol und einer Uneinheitlichkeit U von 1,56.

### Beispiel 1

Aus einem ersten Vorlagebehälter 1 wird 100 gew.-%iges Chlorbenzol mittels einer Pumpe 3 und aus einem zweiten Vorlagebehälter 2 wird eine ca. 20 gew.-%ige Lösung von Polycarbonat 1 in Methylenchlorid mittels einer Pumpe 4 in einen Rührkessel 5 mit Rührer und Außenbeheizung gefördert. Einerseits durch die Einstellung des Verhältnisses der Zuläufe von 100 gew.-%igem Chlorbenzol aus dem Vorlagebehälter 1 und von ca. 20 gew.-%iger Lösung von Polycarbonat 1 in Methylenchlorid aus dem Vorlagebehälter 2 und andererseits durch die Einstellung eines Rücklaufs von Methylenchlorid über die Kolonne 8 und den Rücklaufbehälter 9 wird das gewünschte Verhältnis der Lösungsmittel Chlorbenzol und Methylenchlorid kontinuierlich zueinander eingestellt, so dass am Auslauf des Rührkessels 5 eine Lösung von Polycarbonat 1 in einer Mischung von Chlorbenzol und Methylenchlorid in der gewünschten Zusammensetzung abgezogen und in den Sammelbehälter 7 geführt werden kann. Im Auffangbehälter 11 wird 100 gew.-%iges Methylenchlorid gesammelt, das nicht wieder dem Rührkessel 5 zugeführt wird. Dieses Methylenchlorid kann wieder an anderer Stelle im Verfahren zur Herstellung von Polycarbonat eingesetzt werden, insbesondere wieder in den Vorlagebehälter 1 zurückgeführt werden.

Die im Sammelbehälter 7 gesammelte Lösung von Polycarbonat 1 in einer Mischung von Chlorbenzol und Methylenchlorid wird im Weiteren einer Voreindampfung und dann einem Ausdampfextruder zugeführt, um ein weitestgehend lösungsmittelfreies Polycarbonat 1 zu erhalten.

In der Tabelle 1 sind die Gehalte [Gew.-%] von Polycarbonat 1, Methylenchlorid und Chlorbenzol und deren Veränderung über die Zeit im Rührkessel 5 wiedergegeben. Die Probennahme erfolgte über ein Septum aus dem Rührkessel 5, die Bestimmung der Zusammensetzung erfolgt mit ¹H-NMR-Spektroskopie.(Fa. Bruker, 400 MHz). Werte für die Summe der Gewichtsanteile von Polycarbonat, Methylenchlorid und Chlorbenzol, die von 100 Gew.-% abweichen, sind durch sind durch die den jeweiligen Messgeräten eigenen Messungenauigkeiten bedingt.

**Tabelle 1:**

| **Zeit [min]** | **Polycarbonat [Gew.-%]** | **Methylenchlorid [Gew.-%]** | **Chlorbenzol [Gew.-%]** |
|---|---|---|---|
| 0 | 22,1 | 78,0 | 0 |
| 12 | 12,8 | 52,0 | 35,2 |
| 18 | 15,8 | 40,5 | 43,7 |
| 22 | 17,6 | 35,4 | 46,9 |
| 32 | 18,9 | 32,6 | 48,5 |
| 47 | 18,9 | 34,2 | 47,6 |
| 55 | 18,3 | 34,2 | 47,6 |
| 75 | 18,5 | 33,5 | 47,9 |
| 100 | 18,0 | 35,9 | 46,0 |

Die Uneinheitlichkeit U von Polycarbonat 1 blieb mit 1,56 im Rahmen der Messgenauigkeit der Bestimmung der Molekulargewichte M_{w} und Mₙ praktisch unverändert.

### Beispiel 2

Beispiel 2 wurde genauso ausgeführt wie Beispiel 1, jedoch - wie in Tabelle 2 dargestellt - mit abweichenden Gehalten [Gew.-%] von Polycarbonat 1, Methylenchlorid und Chlorbenzol und deren Veränderung über die Zeit im Rührkessel 5. Auch in Beispiel 2 erfolgte die Probennahme über ein Septum aus dem Rührkessel 5, die Bestimmung der Zusammensetzung erfolgt mit ¹H-NMR-Spektroskopie.(Fa. Bruker, 400 MHz). Werte für die Summe der Gewichtsanteile von Polycarbonat, Methylenchlorid und Chlorbenzol, die von 100 Gew.-% abweichen, sind durch sind durch die den jeweiligen Messgeräten eigenen Messungenauigkeiten bedingt.

**Tabelle 2:**

| **Zeit [min]** | **Polycarbonat [Gew.-%]** | **Methylenchlorid [Gew.-%]** | **Chlorbenzol [Gew.-%]** |
|---|---|---|---|
| 0 | 18,6 | 81,4 | 0 |
| 19 | 14,3 | 46,0 | 39,6 |
| 27 | 14,3 | 44,4 | 41,3 |
| 41 | 14,8 | 42,6 | 42,6 |

Die Uneinheitlichkeit U von Polycarbonat 1 blieb auch hier mit 1,58 im Rahmen der Messgenauigkeit der Bestimmung der Molekulargewichte M_{w} und Mₙ praktisch unverändert.

### Beispiel 3

Beispiel 3 wurde genauso ausgeführt wie Beispiel 1, jedoch - wie in Tabelle 3 dargestellt - mit abweichenden Gehalten [Gew.-%] von Polycarbonat 1, Methylenchlorid und Chlorbenzol und deren Veränderung über die Zeit im Rührkessel 5. Auch in Beispiel 3 erfolgte die Probennahme über ein Septum aus dem Rührkessel 5, die Bestimmung der Zusammensetzung erfolgt mit ¹H-NMR-Spektroskopie.(Fa. Bruker, 400 MHz). Werte für die Summe der Gewichtsanteile von Polycarbonat, Methylenchlorid und Chlorbenzol, die von 100 Gew.-% abweichen, sind durch sind durch die den jeweiligen Messgeräten eigenen Messungenauigkeiten bedingt.

**Tabelle 3:**

| **Zeit [min]** | **Polycarbonat [Gew.-%]** | **Methylenchlorid [Gew.-%]** | **Chlorbenzol [Gew.-%]** |
|---|---|---|---|
| 0 | 18,3 | 81,7 | 0 |
| 32 | 13,4 | 46,1 | 40,5 |
| 41 | 14,6 | 42,3 | 43,1 |
| 46 | 14,4 | 42,8 | 42,8 |
| 55 | 14,8 | 42,0 | 43,2 |
| 70 | 15,4 | 41,3 | 43,3 |
| 82 | 14,6 | 41,5 | 43,9 |
| 101 | 14,4 | 42,2 | 43,1 |

Tabelle 4 zeigt für das Beispiel 3 im Rahmen der Messgenauigkeiten sowohl anhand der Molekulargewichte M_{w} und Mₙ als auch der relativen Lösungsviskositäten (ηrel; auch als eta rel bezeichnet), bestimmt in Dichlormethan bei einer Konzentration von 5 g/l bei 25 °C mit einem Ubbelohdeviskosimeter, dass keine Veränderung des Polycarbontes durch den Lösemittelaustausch erfolgt. Das Kürzel "ng" in der Tabelle 4 steht dabei für "nicht gemessen", das heißt, für diese Zeit wurde der fragliche Wert nicht bestimmt.

**Tabelle 4:**

| **Zeit [min]** | **Relative Lösungsviskosität des Polycarbonats [eta rel]** | **Mₙ [g/mol]** | **M_{w} [g/mol]** | **Uneinheitlichkeit U = (M_{w}/Mₙ) - 1** |
|---|---|---|---|---|
| 0 | 1,303 | 11160 | 28910 | 1,59 |
| 32 | ng | ng | ng | ng |
| 41 | ng | ng | ng | ng |
| 46 | ng | ng | ng | ng |
| 55 | 1,300 | 10990 | 29040 | 1,64 |
| 70 | 1,298 | 10830 | 29030 | 1,68 |
| 82 | ng | ng | ng | ng |
| 101 | 1,300 | 11110 | 29140 | 1,62 |

### Vergleichsmaterialien:

Polycarbonat 2: Ein nach dem Phasengrenzflächenverfahren in einem Lösemittelgemisch aus gleichen Teilen Methylenchlorid und Chlorbenzol unter aminischer Katalyse hergestelltes Polycarbonat auf der Grundlage von BPA und t-Butylphenol als Kettenabbrecher mit einem M_{w} von 29320 g/mol und einer Uneinheitlichkeit U von 1,82.

Polycarbonat 3: Ein nach dem Phasengrenzflächenverfahren in reinem Methlenchlorid unter aminischer Katalyse hergestelltes Polycarbonat auf der Grundlage von BPA und t-Butylphenol als Kettenabbrecher mit einem M_{w} von 17540 g/mol und einer Uneinheitlichkeit U von 1,35.

Polycarbonat 4: Ein nach dem Phasengrenzflächenverfahren in einem Lösemittelgemisch aus gleich Teilen Methylenchlorid und Chlorbenzol unter aminischer Katalyse hergestelltes Polycarbonat auf der Grundlage von BPA und t-Butylphenol als Kettenabbrecher mit einem M_{w} von 19380 g/mol und einer Uneinheitlichkeit U von 1,45.

Aus dem Vergleich von Polycarbonat 1 aus Beispiel 1 oder Beispiel 2 mit dem Vergleichsmaterial Polycarbonat 2 ist leicht zu ersehen, dass bei ansonsten gleicher Herstellung und vergleichbarem Molekulargewicht M_{w} Polycarbonat 1, das in reinem Methylenchlorid hergestellt wurde, eine geringere Uneinheitlichkeit U aufweist als Polycarbonat 2, das in einem Lösemittelgemisch aus gleichen Teilen Methylenchlorid und Chlorbenzol hergestellt wurde. Trotzdem liegt Polycarbonat 1 am Ende der Versuche nach Beispiel 1 oder Beispiel 2 für eine bessere Aufreinigung vorteilhaft in einem Lösungsmittelgemisch aus etwa gleichen Teilen Methylenchlorid und Chlorbenzol vor.

Es konnte also gezeigt werden, dass die erfindungsgemäße Veränderung der Zusammensetzung des organischen Lösungsmittels der organischen das Polycarbonat enthaltenden Phase die Uneinheitlichkeit U des Polycarbonats nicht verändert. Auf diese Weise wird auf der einen Seite erreicht, dass der besseren Aufreinigung der erhaltenen hochkonzentrierten Polycarbonatschmelze wegen diese Aufreinigung aus einem organisches Lösungsmittelgemisch heraus erfolgen kann, das mindestens 40 Gew.-% eines höhersiedenden Lösungsmittels aufweist, auf der anderen Seite erreicht, dass die Uneinheitlichkeit des erhaltenen Polycarbonats niedrig ist. Auch lässt sich das eingangs noch in einem leichtsiedenden organischen Lösungsmittel vorliegende Polycarbonat leichter salz- und alkalifrei waschen.

Auch ist es ist leicht zu ersehen, dass bei ansonsten gleicher Herstellung und vergleichbarem Molekulargewicht M_{w} Polycarbonat 3, das in reinem Methylenchlorid hergestellt wurde, eine geringere Uneinheitlichkeit U aufweist als Polycarbonat 4, dass in einem Lösemittelgemisch aus gleichen Teilen Methylenchlorid und Chlorbenzol hergestellt wurde. Die Unterschiede in der Uneinheitlichkeit rühren bei ansonsten gleicher Herstellung und vergleichbarem Molekulargewicht M_{w} des Polycarbonats also vom verwendeten Lösungsmittel bzw. Lösungsmittel ab, nicht von geringen Unterschieden im Molekulargewicht M_{w}.

## Patentansprüche

1. Verfahren zur kontinuierlichen Herstellung eines Polycarbonats nach dem Phasengrenzflächenverfahren, wobei das Verfahren wenigstens folgende Schritte umfasst:
(a) Lösen einer Dihydroxyarylverbindung in einer wässrigen Phase und Lösen eines Carbonylhalogenids in einer organischen Phase, wobei die wässrige Phase ein Alkalihydroxid enthält und die organische Phase ein organisches Lösungsmittel mit einer Zusammensetzung (A) enthält;
(b) Umsetzung der in der wässrigen Phase gelösten Dihydroxyarylverbindung mit dem in der organischen Phase gelösten Carbonylhalogenid zu einem Reaktionsgemisch enthaltend ein in der organischen Phase gelöstes Polycarbonat und ein in der wässrigen Phase gelöstes Alkalihalogenid;
(c) Abtrennung der organischen das Polycarbonat aus Schritt (b) enthaltenden Phase von der wässrigen ein gelöstes Alkalihalogenid enthaltenden Phase;
(d) Waschen der organischen das Polycarbonat aus Schritt (b) enthaltenden Phase mit einem wässrigen Medium;
(e) Veränderung der Zusammensetzung des organischen Lösungsmittels der organischen das Polycarbonat aus Schritt (b) enthaltenden Phase, bis ausgehend von der Zusammensetzung (A) eine Zusammensetzung (B) des organischen Lösungsmittels erreicht ist;
(f) Abtrennen des in Schritt (b) erhaltenen Polycarbonats aus der organischen Phase,
wobei das organische Lösungsmittel der Zusammensetzung (A)
(i) 80 bis 100 Gew.-%, bevorzugt 90 bis 100 Gew.-%, besonders bevorzugt 95 bis 100 Gew.-% eines leichtsiedenden organischen Lösungsmittels enthält, und
(ii) 20 bis 0 Gew.-%, bevorzugt 10 bis 0 Gew.-%, besonders bevorzugt 5 bis 0 Gew.-% eines höhersiedenden organischen Lösungsmittels enthält,
wobei die Summe aus dem Gehalt an leichtsiedendem organischen Lösungsmittel und dem Gehalt an höhersiedendem organischem Lösungsmittel in der Zusammensetzung (A) 100 Gew.-% beträgt,
und wobei das organische Lösungsmittel der Zusammensetzung (B)
(iii) 30 bis 70 Gew.-%, bevorzugt 40 bis 60 Gew.-%, eines leichtsiedenden organischen Lösungsmittels enthält, und
(iv) 70 bis 30 Gew.-%, bevorzugt 60 bis 40 Gew.-% eines höhersiedenden organischen Lösungsmittels enthält,
wobei die Summe aus dem Gehalt an leichtsiedendem organischen Lösungsmittel und dem Gehalt an höhersiedendem organischem Lösungsmittel in der Zusammensetzung (B) 100 Gew.-% beträgt.

2. Verfahren nach Anspruch1, wobei
der Siedepunkt des höhersiedenden organischen Lösungsmittels von 40 bis 150 °C, bevorzugt von 60 bis 100 °C, höher ist als der Siedepunkt des leichtsiedenden organischen Lösungsmittels ist.

3. Verfahren nach Anspruch 1 oder 2, wobei
der Siedepunkt des leichtsiedenden organischen Lösungsmittels 30 °C bis 70 °C beträgt, bevorzugt 35 °C bis 65 °C beträgt, und
der Siedepunkt des höhersiedenden organischen Lösungsmittels 100 °C bis 210 °C beträgt, bevorzugt 105 °C bis 140 °C beträgt.

4. Verfahren nach einem der vorhergehenden Ansprüche, wobei
in Schritt (e) leichtsiedendes organisches Lösungsmittel aus der organischen Phase entfernt wird und höhersiedendes organisches Lösungsmittel zur organischen Phase zugegeben wird.

5. Verfahren nach Anspruch 4, wobei
in Schritt (e) leichtsiedendes organisches Lösungsmittel durch Verdampfen aus der organischen Phase entfernt wird.

6. Verfahren nach Anspruch 4 oder 5, wobei
die Masse des entfernten leichtsiedenden organischen Lösungsmittels von 80 bis 120 %, bevorzugt von 90 bis 110 %, besonders bevorzugt von 95 bis 105 %, der Masse des zugegebenen höhersiedenden organischen Lösungsmittel ist.

7. Verfahren nach einem der vorhergehenden Ansprüche, wobei
das leichtsiedende Lösungsmittel nur ein Lösungsmittel umfasst.

8. Verfahren nach einem der vorhergehenden Ansprüche, wobei
das höhersiedende Lösungsmittel nur ein Lösungsmittel umfasst.

9. Verfahren nach einem der vorhergehenden Ansprüche, wobei
das leichtsiedende organische Lösungsmittel und das höhersiedende organische Lösungsmittel müssen vollständig ineinander mischbar sind und die Löslichkeit von Wasser im leichtsiedenden Lösungsmittel maximal 0,2 g/L bei 20 °C beträgt und die Löslichkeit von Wasser im höhersiedenden Lösungsmittel maximal 0,3 g/L bei 20 °C beträgt.

10. Verfahren nach einem der vorhergehenden Ansprüche, wobei
das leichtsiedende Lösungsmittel aus der Gruppe umfassend die Mitglieder Methylenchlorid, Chloroform, Trichlorethylen, 1,1,1-Trichlorethan und 1,1,2-Trichlorethan oder einem Gemisch aus zwei oder mehreren dieser Mitglieder ausgewählt ist, bevorzugt das leichtsiedende Lösungsmittel Methylenchlorid oder Chloroform oder ein Gemisch aus Methylenchlorid und Chloroform ist, besonders bevorzugt das leichtsiedende Lösungsmittel Methylenchlorid ist.

11. Verfahren nach einem der vorhergehenden Ansprüche, wobei
das höhersiedende Lösungsmittel Chlorbenzol oder Toluol oder ein Gemisch aus Chlorbenzol und Toluol umfasst, bevorzugt das höhersiedende Lösungsmittel Chlorbenzol oder Toluol oder ein Gemisch aus Chlorbenzol und Toluol ist, besonders bevorzugt das höhersiedende Lösungsmittel Chlorbenzol ist.

12. Verfahren nach Anspruch 4 oder 5, wobei
das in Schritt (e) entfernte leichtsiedende Lösungsmittel wieder zur Herstellung eines organischen Lösungsmittels mit einer Zusammensetzung (A) verwendet wird.

13. Verfahren nach einem der vorhergehenden Ansprüche, wobei
nach Abtrennen des in Schritt (b) erhaltenen Polycarbonats aus der organischen Phase in Schritt (e) die organische Phase nach Schritt (d) zur Herstellung des organischen Lösungsmittels der Zusammensetzung (B) zurückgeführt wird.

14. Polycarbonat, hergestellt nach einem der Ansprüche 1 bis 13.

15. Verwendung eines Polycarbonat, hergestellt nach einem der Ansprüche 1 bis 13, zur Herstellung von Compounds, Polycarbonatblends, Extrudaten und Formkörpern.
